# EUROPÄISCHE PATENTSCHRIFT

(11) **EP 1 717 472 B1**
(45) Veröffentlichungstag und Bekanntmachung des Hinweises auf die Patenterteilung: **09.04.2008**
(21) Anmeldenummer: 06007928.2
(22) Anmeldetag: 15.04.2006
(51) Int. Cl.: F16D 23/12, F16D 65/14

(54) **Wipphebelaktor, insbesondere zur Betätigung einer Kupplung**
Rocking lever actuator, in particular for actuating a clutch
Dispositif de commande avec un levier balancant, en particulier pour un embrayage

(30) Priorität: 28.04.2005 DE 102005019791
(43) Veröffentlichungstag der Anmeldung: 02.11.2006
(73) Patentinhaber: LuK Lamellen und Kupplungsbau Beteiligungs KG, 77815 Bühl (DE)
(72) Erfinder: Ahnert, Gerd, 77880 Sasbach (DE); Burkhart, Dirk, 77815 Bühl (DE)

(56) Entgegenhaltungen:
- EP-A1- 1 455 106
- WO-A1-01/44677
- WO-A2-03/016745
- DE-A1- 4 330 440
- DE-A1- 10 140 077

## Beschreibung

Die vorliegende Erfindung betrifft einen Wipphebelaktor zur Betätigung insbesondere einer Kupplung eines Fahrzeuges.

Bisher wurden Kupplungen beispielsweise mittels eines Hebels betätigt, der eine unveränderliche Hebellänge besitzt und beispielsweise mittels eines elektromotorischen Antriebs zum Öffnen und/oder Schließen der Kupplung angetrieben werden konnte. Wenn nun über den Verfahrweg der Kupplungsbetätigung eine veränderliche Betätigungskraft aufgebracht werden musste, so wurde zu diesem Zweck der Elektromotor, um ein entsprechend hohes Moment zur Verfügung zu stellen, mit entsprechenden Stromwerten beaufschlagt.

Um nun diese Problematik zu umgehen, wurde von der Anmelderin ein unter der EP 1 455 106 A1 und der DE 10 2004 009 832 A1 beschriebenes Hebelsystem zum Betätigen von Kupplungen geschaffen. Das dort beschriebene Hebelsystem weist Hebelarme mit veränderbaren Hebellängen auf, wobei zu diesem Zweck der den Hebel abstützende Hebeldrehpunkt entlang des Betätigungshebels verlagert werden kann und sich somit bei einem unveränderlichen Krafteinleitungspunkt in den Hebel in Abhängigkeit von der Verlagerung des Hebeldrehpunkts verschiedene wirksame Hebellängen ergeben. Obwohl ein solches Hebelsystem bereits vielfache Vorteile gegenüber bekannten Kupplungsbetätigungsvorrichtungen aufweist, lässt es trotzdem Raum für deutliche Verbesserungen.

Das nach den oben genannten Offenlegungsschriften bekannte Hebelsystem wird an dem Krafteinleitungspunkt der Betätigungskraft in den Hebel mit einer vorbestimmbaren Kraft, der Lastfederkraft beaufschlagt. Ausgangsseitig, d. h. also beispielsweise auf der Seite eines Axiallagers wirkt eine entsprechende, zur in den Betätigungshebel eingeleiteten Lastfederkraft komplementäre Reaktionskraft, auch Einrückkraft genannt. Anstelle eines einzelnen Betätigungshebels kann beispielsweise auch eine Vielzahl von um das Axiallager radial sternförmig verlaufenden gleichartigen Betätigungshebeln vorgesehen werden.

Der Hebeldrehpunkt für den Betätigungshebel ist in Form einer Stützrolle oder durch mehrere Rollen gebildet. Diese Stützrolle wird mittels eines elektromotorischen Antriebs verlagert, um die Länge der beiden sich ergebenden Hebelarme am Betätigungshebel zu verändern.

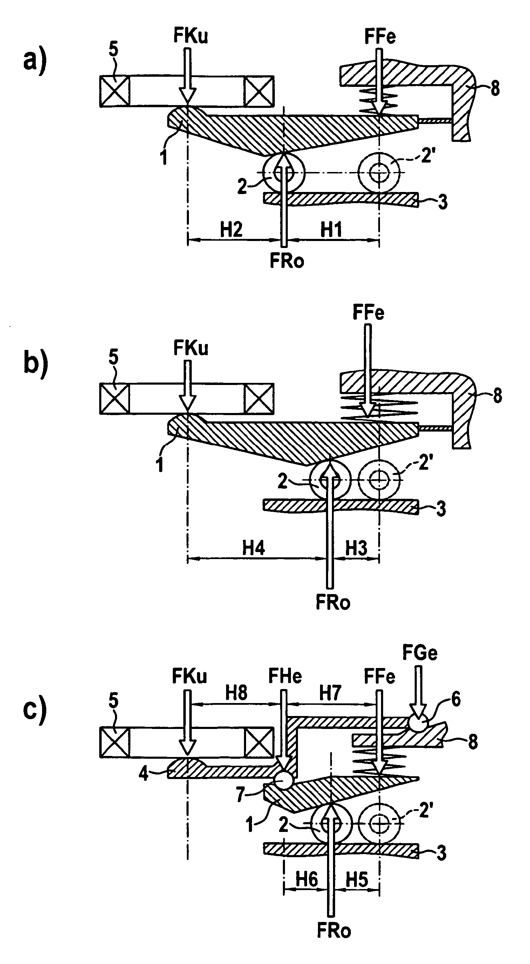

In den Figuren a) und b) sind derartige herkömmliche Wipphebelaktoren schematisch dargestellt In der Figur a) ist der Wipphebelaktor unter normalen Bauraumverhältnissen eingebaut, d. h., dass der Wipphebel 1 über eine Stützrolle 2 an einer Grundplatte 3 abgestützt ist und das rechte Ende des Wpphebels 1 mittels einer Lastfeder mit der Kraft FFe beaufschlagt ist, während das linke Ende des Wipphebels 1 gegen ein Einrücklager 5 anliegt, über welches eine Kupplungsgegenkraft FKu einwirkt. An der Stützrolle 2 ergibt sich dann die Rollenkraft FRo. Die Stützrolle 2 ist in der Figur a) in der am weitesten links möglichen Position eingezeichnet, während die gestrichelte Stützrolle 2' in der am weitesten rechts möglichen Position eingezeichnet ist.

Als Hebelarme H1 und H2 ergeben sich dann in der gezeigten Position zwei gleich lange Hebelarme H1 = H2. Ist beispielsweise die über die Lastfeder einwirkende Kraft FFe gleich 1000 N und die am Einrücklager 5 anliegende Kupplungsgegenkraft FKu ebenfalls 1000 N, so ist die resultierende Rollenkraft FRo gleich 2000 N.

Der Wpphebel 1 ist in der Figur a) und b) am rechten Ende über eine symbolisch dargestellte Abstützung an einem Gestell 8 derart festgelegt, dass ein Verschwenken um den Hebeldrehpunkt zwar ermöglicht ist, aber sonstige Verlagerungen weitgehend ausgeschlossen sind. Die auftretenden Reaktionskräfte gegenüber einer Verschiebung der Stützrolle 2 müssen auf diese Art und Weise abgestützt werden. Der Wipphebel 1 führt eine Dreh-Schub-Bewegung aus, so dass entweder ein Dreh-Schub-Gelenk oder eine Verbindung mit einer Koppelstange an dieser Stelle erforderlich ist.

In der Figur b) treten infolge von beschränkten Bauraumbedingungen erhebliche Kräfte an den Bauteilen auf. Durch die ungünstigen Hebelverhältnisse sind sehr große Lastfedern erforderlich. Weiterhin werden die Stützrolle(n) 2 durch große Kräfte belastet und an den Hebelarmen des Wipphebels 1 treten hohe Biegemomente auf. Diese Effekte könnten mit massiveren, größeren und teureren Bauteilen ausgeglichen werden. Zum Beispiel kann die Stützrolle 2 nach der Figur b) nur im Bereich des Hebelarms H3 verfahren, wobei dann bei einer Federkraft FFe der Lastfeder von 3000 N eine Kupplungsgegenkraft FKu von 1000 N anliegt und die Rollenkraft FRo an der Stützrolle dann 4000 N beträgt. Der Hebelarm H3 ist dabei 1/3 von H4.

Bei der Ausführungsform nach der Figur b) ist also bei einer vergleichbaren Kupplungsgegenkraft FKu von 1000 N - verglichen mit dem Beispiel nach der Figur a) - die resultierende Rollenkraft FRo doppelt so hoch und die Federkraft FFe dreimal so hoch.

Es ist daher die Aufgabe der vorliegenden Erfindung, bei einem Wipphebelaktor, der zur Betätigung einer Kupplung eines Fahrzeuges vorgesehen ist und der über mindestens einen, eine veränderliche Betätigungskraft zum Öffnen und/oder Schließen der Kupplung ausübenden Wipphebel verfügt, eine Reduzierung der auftretenden Kräfte zu realisieren, sofern beengte Bauraumverhältnisse zu ungünstigen Hebelarmverhältnissen führen.

Diese Aufgabe wird gelöst durch einen Wipphebelaktor mit den Merkmalen des Patentanspruchs 1.

Demnach zeichnet sich der erfindungsgemäße Wipphebelaktor, der insbesondere zur Betätigung einer Kupplung eines Fahrzeuges, mit mindestens einem, eine veränderliche Betätigungskraft zum Öffnen und/oder Schließen der Kupplung ausübenden Wipphebel versehen ist, der mittels einer Feder beaufschlagbar ist, wobei ein Hebeldrehpunkt des Wipphebels verlagerbar ist, dadurch aus, dass zwischen dem Wipphebel und einem Einrücklager der Kupplung ein Zwischenhebel zur Kraftübertragung angeordnet ist.

Die Vorteile dieser Lösung sind eine erhebliche Reduzierung der an den Bauteilen auftretenden Kräfte und Biegemomente sowie die einfache Abstützung des Wipphebels.

Vorzugsweise wird der Hebeldrehpunkt des Wipphebels mittels zumindest einer Stützrolle ausgebildet, die elektromotorisch angetrieben ist bzw. verlagert wird. Nach einer bevorzugten Ausführungsform ist der Zwischenhebel mittels eines gestellfesten Drehgelenks am Gestell angelenkt, wobei dann zwischen dem Wipphebel und dem Zwischenhebel ein zweites Drehgelenk vorgesehen ist.

Bei dem erfindungsgemäßen Wpphebelaktor sind die Hebelarme derart gewählt, dass möglichst geringe Kräfte an den Kraftein- bzw. Ausleitungspunkten der die Kräfte übertragenden Bauteile auftreten.

Die vorstehende Aufgaben, die Merkmale und Vorteile nach der vorliegenden Erfindung können unter Berücksichtigung der folgenden, detaillierten Beschreibung der bevorzugten Ausführungsformen der vorliegenden Erfindung und unter Bezugnahme auf die zugehörigen Zeichnungen besser verstanden werden.

In den Zeichnungen ist in der
- Figur a): ein Querschnittansicht eines herkömmlichen Wipphebelaktors dargestellt, wobei sich der Wipphebelaktor in einer Betätigungsposition befindet und der Wipphebel unter normalen Bauraumverhältnissen eingebaut ist;
- Figur b): eine Querschnittansicht eines herkömmlichen Wipphebelaktors nach der Figur a) gezeigt, wobei hier der Wipphebelaktor unter beengten Bauraumverhältnissen eingebaut ist und der Verfahrweg der Stützrolle begrenzt ist; und
- Figur c): ein erfindungsgemäßer Wipphebelaktor gezeigt, der unter beengten Bauraumverhältnissen eingebaut ist, vergleichbar den Verhältnissen, die in der Figur b) dargestellt sind.

Der erfindungsgemäße Wipphebelaktor, wie er als Teil einer Kupplungsaktorik Verwendung findet oder auch bei einer Getriebebremse einsetzbar wäre, wird in der gezeigten bevorzugten Ausführungsform nach der Figur c) derart eingebaut, dass eine Kupplung (nicht dargestellt) mittels eines Wipphebels 1 betätigt wird. Die Betätigungskraft bzw. Kupplungsgegenkraft FKu ist in Form eines Pfeils am linken Ende des Wipphebels 1 eingezeichnet und greift an einem Einrücklager 5 an. Durch Verschwenken des Wipphebeis 1 um einen Hebeldrehpunkt - ausgebildet durch die Stützrolle 2 - im Uhrzeigersinn würde die nicht dargestellte Kupplung betätigt. Der Wipphebel 1 drückt dabei über ein Drehgelenk 7, welches die Wirkverbindung zu einem Zwischenhebel 4 herstellt, den Zwischenhebel 4 mit seinem linken Ende nach oben, während der Zwischenhebel 4 um das gestellfeste Drehgelenk 6 ebenfalls im Uhrzeigersinn verschwenkt.

Ein Elektromotor (nicht dargestellt) ist vorzugsweise vorgesehen, um die Stützrolle 2 derart anzutreiben, dass diese von rechts nach links oder umgekehrt verlagert wird und damit der Hebeldrehpunkt des Wipphebels 1 entsprechend mit verlagert wird. Die Stützrolle 2 stützt sich dabei an einer Grundplatte 3 ab. Vorzugsweise treibt der Elektromotor die Stützrolle 2 über ein Traversensystem nur in einer Richtung an und die Stützrolle 2 wird automatisch - beispielsweise durch gespeicherte Federkraft - zurückgeführt.

Der mögliche Verfahrweg der Stützrolle 2 ist dabei durch die rechts gestrichelt eingezeichnete Stützrolle 2' dargestellt. Eine Lastfeder, die am rechten Ende des Wipphebels 1 eine Federkraft FFe in den Wipphebel 1 einleitet, erzeugt am linken Ende des Wipphebels 1 eine über die beiden Hebelarme H5 und H6 definierte Hebelkraft FHe. Da die eingeleitete Federkraft FFe konstant ist, wird die Hebelkraft FHe durch Verlagerung des Hebeldrehpunktes bzw. der Stützrolle 2 in der Höhe verändert, indem die Hebelübersetzung verändert wird bzw. die Hebelarmlängen H5 und H6 verändert werden.

Der Elektromotor treibt also die Stützrolle 2 an und verlagert die Stützrolle 2, die im Übrigen auch aus einer Doppelrolle oder mehreren Rollen bestehen kann.

Vergleicht man nun die Verhältnisse zwischen den Wipphebelaktoren der Figuren b) und c) so lassen sich die folgenden Feststellungen treffen: die Bauraumverhältnisse sind im Hinblick auf den Verfahrweg der Stützrolle 2 identisch; um die auftretenden Kräfte zu reduzieren und die Bauteile kleiner dimensionieren zu können, ist der erfindungsgemäße Zwischenhebel 4 vorgesehen.

Der Verfahrweg der Stützrolle 2, der dem maximal möglichen Hebelarm H5 in der Figur c) entspricht, ist gleich lang wie der Verfahrweg der Stützrolle 2 in der Figur b). Die Gestellkraft FGe ist beispielsweise 700 N, die Federkraft FFe 1700 N und die Kupplungsgegenkraft FKu wiederum 1000 N. So ergeben sich als Rollenkraft FRo 3400 N und als Hebelkraft 1700 N.

Relativ zu der Figur b) sinkt damit die Rollenkraft von 4000 N auf 3400 N, sowie die Federkraft FFe von 3000 N auf 1700 N sinkt. Die Lastfeder, die die Federkraft FFe erzeugen muss, kann damit nach der vorliegenden Erfindung deutlich schwächer ausgebildet werden als im Vergleichsbeispiel nach der Figur b) und auch die Stützrolle 2, die anstatt 4000 N nur noch 3400 N zu übertragen hat, kann schwächer dimensioniert werden. Im Ergebnis können diese Bauteile kleiner und leichter ausgebildet werden, wodurch sich ein zusätzlicher Kosteneinspareffekt ergibt.

Der erfindungsgemäße Zwischenhebel 4, der auch als Übertragungs- bzw. Übersetzungshebel bezeichnet werden kann, führt bei gleichem Bewegungsbereich der Stützrolle zu einer geringeren Rollenkraft FRo und einer erheblich kleineren Federkraft FFe - gegenüber der Ausführung nach der Figur b).

Die auftretenden maximalen Biegemomente im Vergleich verdeutlichen diese Wirkung:
Figur a) max. Biegemoment im Wipphebel 50 Nm (50 mm x 1000 N);
Figur b) max. Biegemoment im Wipphebel 75 Nm (75 mm x 1000 N);
Figur c) max. Biegemoment im Wipphebel 42,5 Nm (25 mm x 1700 N); und
Figur c) max. Biegemoment im Zwischenhebel 50 Nm (50 mm x 1000 N).

H1, H2 entspricht dabei in den gezeigten Beispielen 50 mm, H3 25 mm, H4 75 mm, H7 70 mm, H8 50 mm und H5, H6 jeweils 25 mm.

Die Abstützung des Wipphebels 1 ist erfindungsgemäß über ein Drehgelenk 7 relativ zum Zwischenhebel 4 und mittels eines gestellfesten Drehgelenks 6 am Gestell 8 verwirklicht.

Kurz zusammengefasst, schafft die vorliegende Erfindung einen Wipphebelaktor, der zur Betätigung einer Kupplung eines Fahrzeuges, mit mindestens einem, eine veränderliche Betätigungskraft zum Öffnen und/oder Schließen der Kupplung ausübenden Wipphebel 1 versehen ist, der mittels einer Feder beaufschlagbar ist, wobei ein Hebeldrehpunkt des Wipphebels 1 vorzugsweise mittels eines Elektromotors verlagerbar ist, und wobei zwischen dem Wipphebel 1 und einem Einrücklager 5 der Kupplung ein Zwischenhebel 4 zur Kraftübertragung angeordnet ist. Der Hebeldrehpunkt wird vorzugsweise durch zumindest eine Stützrolle 2, 2' ausgebildet.

Hinsichtlich vorstehend im Einzelnen nicht näher erläuterter Merkmale der Erfindung wird im Übrigen ausdrücklich auf die Ansprüche und die Zeichnungen verwiesen.

### Bezugszeichenliste

- 1: Wpphebel
- 2, 2': Stützrolle(n)
- 3: Grundplatte
- 4: Zwischenhebel
- 5: Einrücklager
- 6: Drehgelenk, gestellfest
- 7: Drehgelenk
- 8: Gestell

- FFe: Federkraft
- FKu: Kupplungsgegenkraft
- FRo: Rollenkraft
- FGe: Gestellkraft
- FHe: Hebelkraft
- H1, ..., H8: Hebelarm(e)

## Patentansprüche

1. Wipphebelakton zur Betätigung einer Kupplung eines Fahrzeuges, mit mindestens einem, eine veränderliche Betätigungskraft zum Öffnen und/oder Schließen der Kupplung ausübenden Wipphebel (1), der mittels einer Feder beaufschlagbar ist, wobei ein Hebeldrehpunkt des Wipphebels (1) verlagerbar ist, **dadurch gekennzeichnet, dass** zwischen dem Wipphebel (1) und einem Einrücklager (5) der Kupplung ein Zwischenhebel (4) zur Kraftübertragung angeordnet ist.

2. Wipphebelaktor nach Anspruch 1, **dadurch gekennzeichnet, dass** der Hebeldrehpunkt des Wipphebels (1) mittels zumindest einer Stützrolle (2, 2') definiert ist.

3. Wipphebelaktor nach Anspruch 1 oder 2, **dadurch gekennzeichnet, dass** der Zwischenhebel (4) mittels eines gestellfesten Drehgelenks (6) angelenkt ist.

4. Wipphebelaktor nach einem der Ansprüche 1 bis 3, **dadurch gekennzeichnet, dass** zwischen dem Wipphebel (1) und dem Zwischenhebel (4) ein Drehgelenk (7) vorgesehen ist.

5. Wipphebelaktor nach einem der Ansprüche 2 bis 4, **dadurch gekennzeichnet, dass** der Verfahrweg der Stützrolle (2, 2') gegenüber einem Wipphebelaktor ohne Zwischenhebel gleich lang ist.

## Claims

1. Rocker lever actuator for actuating a clutch of a vehicle, having at least one rocker lever (1) which exerts a variable actuating force for opening and/or closing the clutch and can be loaded by means of a spring, it being possible for a rotational fulcrum of the rocker lever (1) to be displaced, **characterized in that** an intermediate lever (4) for force transmission is arranged between the rocker lever (1) and an engagement bearing (5) of the clutch.

2. Rocker lever actuator according to Claim 1, **characterized in that** the rotational fulcrum of the rocker lever (1) is defined by means of at least one supporting roller (2, 2').

3. Rocker lever actuator according to Claim 1 or 2, **characterized in that** the intermediate lever (4) is articulated by means of a rotary joint (6) which is fixed to the frame.

4. Rocker lever actuator according to one of Claims 1 to 3, **characterized in that** a rotary joint (7) is provided between the rocker lever (1) and the intermediate lever (4).

5. Rocker lever actuator according to one of Claims 2 to 4, **characterized in that** the displacement path of the supporting roller (2, 2') is equally as long as a rocker lever actuator without intermediate lever.

## Revendications

1. Actionneur de levier basculant, pour l'actionnement d'un embrayage de véhicule, comprenant au moins un levier basculant (1) exerçant une force d'actionnement variable pour l'ouverture et/ou la fermeture de l'embrayage, qui peut être sollicité au moyen d'un ressort, un centre de rotation du levier basculant (1) pouvant être déplacé, **caractérisé en ce que** l'on dispose entre le levier basculant (1) et un palier d'embrayage (5) de l'embrayage un levier intermédiaire (4) pour le transfert de force.

2. Actionneur de levier basculant selon la revendication 1, **caractérisé en ce que** le centre de rotation du levier basculant (1) est défini au moyen d'au moins un galet de support (2, 2').

3. Actionneur de levier basculant selon la revendication 1 ou 2, **caractérisé en ce que** le levier intermédiaire (4) est articulé au moyen d'une articulation pivotante (6) fixée au bâti.

4. Actionneur de levier basculant selon l'une quelconque des revendications 1 à 3, **caractérisé en ce que** l'on prévoit entre le levier basculant (1) et le levier intermédiaire (4) une articulation pivotante (7).

5. Actionneur de levier basculant selon l'une quelconque des revendications 2 à 4, **caractérisé en ce que** la course de déplacement du galet de support (2, 2') est de même longueur qu'un actionneur de levier basculant sans levier intermédiaire.
